# EUROPÄISCHE PATENTANMELDUNG

(11) **EP 0 881 101 A1**
(43) Veröffentlichungstag der Anmeldung: **02.12.1998**
(21) Anmeldenummer: 98108965.9
(22) Anmeldetag: 16.05.1998
(51) Int. Cl.: B60C 1/00, C08L 9/00, C08L 7/00

(54) **Kautschukmischung für Laufstreifen für Fahrzeugluftreifen**

(30) Priorität: 26.05.1997 DE 19721917
(71) Anmelder: Continental Aktiengesellschaft, 30165 Hannover (DE)
(72) Erfinder: Dumke, Joachim, 31275 Lehrte (DE); Wiese, Ursula, Dr., 30453 Hannover (DE); Du Bois, André, Dr., 30657 Hannover (DE)

(57) **Zusammenfassung**

Die Erfindung bezieht sich auf eine schwefelvernetzbare Kautschukmischung für die Herstellung von Laufstreifen, insbesondere für Winterreifen, die als Kautschukkomponente Polyisopren und Polybutadien sowie weitere übliche Füll- und Zusatzstoffe enthält.

Um Fahrzeugluftreifen bereitzustellen, die zumindest bei gleichbleibendem Naßgriff eine hervorragende Traktion auf Eis und Schnee gewährleisten, wird vorgeschlagen, daß die Kautschukmischung, bezogen auf 100 Teile des gesamten Kautschuks, 20 - 60 pphr cis 1,4 Polyisopren, 20 - 60 pphr Polybutadien mit einem cis-Gehalt > 90 mol% und 20 - 60 pphr Polybutadien mit einem Vinyl-Gehalt zwischen 40 und 90 mol% sowie 50 - 100 pphr Kieselsäure enthält.

## Beschreibung

Die Erfindung betrifft eine schwefelvernetzbare Kautschukmischung für die Herstellung von Laufstreifen, insbesondere für Winterreifen, die als Kautschukkomponente Polyisopren und Polybutadien sowie weitere übliche Füll- und Zusatzstoffe enthält.

Da die Fahreigenschaften eines Reifens in einem großen Umfang von der Kautschukzusammensetzung des Laufstreifens abhängig sind, werden besonders hohe Anforderungen an die Zusammensetzung der Laufstreifenmischung gestellt. Insbesondere für Winterreifen, die einerseits ein gutes Traktionsvermögen auf Schnee und Eis sowie auf naßer Fahrbahn aufweisen müssen, andererseits aber auch einen geringen Rollwiderstand und einen geringen Abrieb besitzen sollen, wird eine Optimierung dieser Eigenschaften besonders schwierig. Es wurde festgestellt, daß der eingesetzte Füllstoff einen wesentlichen Einfluß auf die Eigenschaften des Fahrverhaltens des Winterreifens hat.
Kautschukmischungen für Laufstreifen, die nur Ruß als Füllstoff enthalten, Zeigen zwar ein ausgewogenes Verhältnis zwischen dem Verhalten auf naßer und winterlicher Fahrbahn, jedoch auf einem noch nicht zufriedenstellenden Niveau. Außerdem sind aus dem Stand der Technik Winterreifen bekannt, deren Laufstreifen aus Kautschukmischungen bestehen, die als Füllstoff zum Teil Kieselsäure enthalten. Mit diesen Mischungen werden Winterreifen mit verbesserten Nässeeigenschaften erhalten - eine Anhebung der Wintereigenschaften konnte aber nicht erzielt werden, so daß auch diese bisher bekannten Mischungssysteme nicht optimal geeignet sind.

So sind in der DE 44 42 691 bzw. DE 44 42 692 Kautschukmischungen für Laufstreifen offenbart, die als Kautschukkomponente zumindest emulsionspolymerisiertes Styren-Butadien-Copolymer, Polyisopren und Polybutadien enthalten. Als Füllstoffe sollen Kieselsäure (25 - 90 Gewichtsteile) bzw. Ruß verwendet werden. Es hat sich aber herausgestellt, daß diese Kautschukmischungen zwar hervorragende Nässeeigenschaften (Traktion auf naßer Straße) dem Reifen verleihen, jedoch für Winterreifen nur unzureichend geeignet sind, da eine Verschlechterung in den Wintereigenschaften (Traktion auf Eis und Schnee) zu verzeichnen ist und außerdem ein höherer Abrieb auftritt. Bekannt sind außerdem aus der Schrift EP 641 823 A1 Kautschukmischungen aus einem Verschnitt von 1,4 cis-Polybutadien und 1,2 Vinyl-Polybutadien mit mittleren und hohen Vinylgehalten und mit einem Gesamtfüllstoffanteil von 60-120 pphr (Kieselsäure und Ruß, wobei das bevorzugte Füllstoffverhältnis 2:1 beträgt). Es hat sich aber gezeigt, dass solche Mischungen nur auf Polybutadienbasis neben einer unzureichenden Weiterreißfestigkeit auch das Winter/Nässe-Potential von der z. B. in der deutschen Patentanmeldung mit dem Aktenzeichen 19653938.2 genannten Kautschukmischung auf der Basis von lösungspolymerisierten Styren-Butadien-Copolymer, Polyisopren und Polybutadien nicht erreichen können.

Die Aufgabe der vorliegenden Erfindung besteht darin, Winterreifen bereitzustellen, die zumindest bei gleichbleibendem Naßgriff eine hervorragende Traktion auf Eis und Schnee gewährleisten.

Gelöst wird diese Aufgabe erfindungsgemäß dadurch, daß die Kautschukmischung, bezogen auf 100 Teile des gesamten Kautschuks, 20 - 60 pphr cis 1,4 Polyisopren, 20 - 60 pphr Polybutadien mit einem cis-Gehalt > 90 mol% und 20 - 60 pphr Polybutadien mit einem Vinylgehalt zwischen 40 und 90 mol% sowie 50 - 100 pphr Kieselsäure enthält.

Das erfindungsgemäß eingesetzte Polyisopren weist einen cis-1,4-Anteil > 90 mol% auf. Solch ein Polyisopren kann durch stereospezifische Polymerisation in Lösung mit Ziegler-Natta-Katalysatoren oder unter Verwendung von fein verteiltem Lithiumalkylen erhalten werden. Vorzugsweise soll für die erfindungsgemäße Kautschukmischung für Laufstreifen von Winterreifen Naturkautschuk Verwendung finden. Der cis-1,4 Polyisopren-Anteil im Naturkautschuk beträgt > 99 mol%.

Für die erfindungsgemäße Kautschukmischung von Winterreifen wird Polybutadien verwendet, dessen cis-1,4 Anteil > 90 mol% beträgt. Solch hohe cis-Anteile werden z. B. durch Lösungspolymerisation in Anwesenheit von Katalysatoren vom Typ der seltenen Erden erreicht.

Außerdem enthält die erfindungsmäßige Kautschukmischung auch ein Polybutadien mit einem hohen 1,2-Vinyl-Gehalt von 40-90 mol%. Diese hohen Vinyl-Anteile können durch Lösungspolymerisation erzielt werden.

Die genannten Kautschukkomponenten (cis 1,4 Polyisopren, Polybutadien mit einem cis-Gehalt > 90 mol% und Polybutadien mit einem Vinylgehalt zwischen 40 und 90 mol% in den jeweilig angegebenen Konzentrationsbereichen) in Verbindung mit 50 - 100 pphr Kieselsäure ergeben Kautschukmischungen für Reifenlaufstreifen von Winterreifen, die eine hervorragende Traktion sowohl auf winterlicher als auch auf nasser Fahrbahn aufweisen. Es war überraschend, daß ohne Anwesenheit von Styren-Anteilen in der Kautschukmischung eine so gute Haftung auf nasser Fahrbahn erreicht werden kann.

Besonders bevorzugt ist, wenn der cis-1,4 Polyisoprenanteil zwischen 20 und 50 pphr, der Polybutadiengehalt mit einem cis-Anteil > 90 mol% zwischen 30 und 50 pphr und der Anteil an Polybutadien mit einem Vinylgehalt zwischen 40 und 90 mol% zwischen 20 und 45 pphr liegt und dabei die Kautschukmischung 65 - 85 pphr Kieselsäure aufweist.

Der in der erfindungsgemäßen Kautschukmischung zur Anwendung kommende Füllstoff Kieselsäure ist aus dem Stand der Technik bekannt. So sollen Kieselsäure mit einer BET-Oberfläche von 145 - 270 m²/g (ASTMD 5604), einer CTAB-Zahl von 120 - 285 m²/g (ASTMD 3765) und einem Porenvolumen von 0,7 - 1,7 ml/g (DIN 66133) Verwendung finden. Als Kieselsäure kann somit z. B. VN3 (Handelsname) der Firma Degussa zum Einsatz kommen. Zur Anbindung der Kieselsäure an das Polymersystem werden Aktivierungsmittel, z. B. Silane wie Bis-3-(triethoxysilylpropyl)tetrasulfid (TESPT) bzw. das entsprechende Disulfid verwendet.

Es ist vorteilhaft, wenn als weiterer Füllstoff Ruß verwendet wird, was verarbeitungstechnische Vorteile mit sich bringt. So können Rußmengen von 10 bis 40 pphr in der Kautschukmischung eingemischt werden, so daß dieser die erwünschten Eigenschaften verliehen werden. Die Ruße sollen folgende Charakteristika aufweisen: DBP-Zahl (ASTMD 2414) 90 bis 200 cm³ pro 100 g, und CTAB-Zahl (ASTMD 3765) von 80 bis 170 m²/g.

Desweiteren enthält die erfindungsgemäße Kautschukmischung für Winterreifen übliche Zusatzstoffe wie Alterungsschutzmittel, Verarbeitungshilfsmittel und Weichmacher anteilig auch z. B. kälteflexible Weichmacher (z. B. Rapsöl). Diese speziellen Weichmacher bringen weitere Vorteile bzgl. der Verarbeitung und verleihen dem Reifenlaufstreifen verbesserte Wintereigenschaften. Zur Vulkanisation wird Schwefel bzw. Schwefelspender verwendet und außerdem sollen vulkanisationsbeeinflussende Stoffe wie Beschleuniger oder Aktivatoren eingesetzt werden.

Anhand der folgende Tabelle 1 soll ein Ausführungsbeispiel näher erläutert werden:

**Tabelle 1**

| | **Standardmischungen** [pphr] (1 - 4) | | | **erfindungsgemäße Mischungen** [pphr] (5 -6) | | |
|---|---|---|---|---|---|---|
| **Bestandteile** | 1 | 2 | 3 | 4 | 5 | 6 |
| Naturkautschuk | 10,0 | 70,0 | 20,0 | 35,0 | 35,0 | 20,0 |
| Polybutadien (cis-Gehalt > 90 mol %) Buna CB 10 -(Fa. Bayer AG) | 45,0 | -- | 50,0 | 32,5 | 32,5 | 50,0 |
| Polybutadien (Vinylgehalt: 70 mol%) VI-BR 70-0 (Fa. Bayer AG) | -- | 30,0 | -- | -- | 32,5 | 30 |
| S-SBR VSL 1940S20 | 45,0 | -- | 30,0 | 32,5 | -- | -- |
| Kieselsäure (VN3-Fa. Degussa) | 70,0 | -- | 70,0 | 70,0 | 70,0 | 70,0 |
| Ruß N 339 | 10,0 | -- | -- | 10,0 | 10,0 | 10,0 |
| Ruß N 234 | -- | 65,0 | -- | -- | -- | -- |
| Schwefel | 1,5 | 1,5 | 1,5 | 1,5 | 1,5 | 1,5 |
| Vulkanisationsbeschleuniger CBS | 1,5 | 1,6 | 1,5 | 1,5 | 1,5 | 1,5 |
| DPG | 2,0 | -- | 2,0 | 2,0 | 2,0 | 2,0 |
| Silan (TESPT) | 7,0 | -- | 7,0 | 7,0 | 7,0 | 7,0 |
| | | | | | | |

| **Eigenschaften** | | | | | | |
|---|---|---|---|---|---|---|
| Wintereigenschaften [%] | 100,0 | 103,0 | 106,0 | 105,0 | 108,0 | 109,0 |
| Nässeeigenschaften [%] | 100,0 | 93,0 | 97,0 | 100,0 | 100,0 | 97,0 |
| Abriebwiderstand [%] | 100,0 | 100,0 | 105,0 | 95,0 | 100,0 | 110,0 |

Die Einheit pphr bezieht sich auf 100 Teile des Gesamtkautschukanteils.

Die angegebenen Nässe-, Winter- bzw. Abriebeigenschaften sind bezogen auf die Meßergebnisse der Standardmischung 1. Diese werden dem Wert 100 zugeordnet, so daß Werte >100 eine Verbesserung der jeweiligen Eigenschaft und Werte < 100 eine Verschlechterung dieser bedeutet.

Aus der Tabelle 1 wird ersichtlich, daß mit den erfindungsmäßigen Mischungen (5 und 6) Winterreifenlaufstreifen hergestellt werden können, die auf dem hohen Nässeniveau der Standardmischungen (1, 3, 4) angesiedelt sind, deren Eigenschaften auf winterlichen Fahrbahnen aber deutlich verbessert sind. Insbesondere ein Vergleich der Mischungen 3 und 6 bzw. 4 und 5 macht deutlich, dass durch einen Austausch des S-SBR durch Vinyl-Polybutadien Verbesserungen hinsichtlich der Wintereigenschaften und des Abriebs zu verzeichnen sind. Diese Verbesserung auf Eis und Schnee wird erst durch die erfindungsgemäße Kombination eines Polymersystems auf der Basis von cis-Polyisopren, cis-Polybutadien und Vinyl-Polybutadien in Verbindung mit dem Füllstoff Kieselsäure ermöglicht. Es war überraschend, insbesondere durch die Verwendung von Vinyl-Polybutadien eine Anhebung der Nässeperformance im Vergleich zu bisher bekannten Vinyl-Polybutadien enthaltenden Gummimischungen (vgl. Standardmischung 2) zu erhalten. Gleichzeitig kann auf die Verwendung von S-SBR verzichtet werden. Des Weiteren erreichen die erfindungsgemäßen Mischungen 5 und 6 eine verbesserte Weiterreißfestigkeit hinsichtlich reinen cis-Polybutadien/Vinyl-Polybutadien-Mischungen, wodurch eine verringerte Rißanfälligkeit im Profilgrund des Fahrzeugluftreifenlaufstreifens erzielt wird.

## Patentansprüche

1. Schwefelvernetzbare Kautschukmischung für die Herstellung von Laufstreifen, insbesondere für Winterreifen, die als Kautschukkomponente Polyisopren und Polybutadien sowie weitere übliche Füll- und Zusatzstoffe enthält,
**dadurch gekennzeichnet,**
daß die Kautschukmischung, bezogen auf 100 Teile des gesamten Kautschuks, 20 - 60 pphr cis 1,4 Polyisopren, 20 - 60 pphr Polybutadien mit einem cis-Gehalt > 90 mol% und 20 - 60 pphr Polybutadien mit einem Vinyl-Gehalt zwischen 40 und 90 mol% sowie 50 - 100 pphr Kieselsäure enthält.

2. Kautschukmischung nach Anspruch 1, dadurch gekennzeichnet, daß sie 20 - 50 pphr cis 1,4 Polyisopren, 30 - 50 pphr Polybutadien mit einem cis-Gehalt > 90 mol%, 20 - 45 pphr Polybutadien mit einem Vinyl-Gehalt zwischen 40 und 90 mol% und 65 - 85 pphr Kieselsäure sowie weitere übliche Füll- und Zusatzstoffe enthält.

3. Kautschukmischung nach Anspruch 1 oder 2, dadurch gekennzeichnet, daß das cis 1,4 Polyisopren Naturkautschuk ist.

4. Kautschukmischung nach zumindest einem der vorhergehenden Ansprüche, dadurch gekennzeichnet, daß die Kautschukmischung als weiteren Füllstoff Ruß enthält.

5. Kautschukmischung nach Anspruch 4, dadurch gekennzeichnet, daß die Kautschukmischung 10 bis 40 pphr Ruß enthält.

6. Fahrzeugluftreifen, dadurch gekennzeichnet, daß er einen Reifenlaufstreifen aufweist, der aus der Kautschukmischung nach zumindest einem der vorhergehenden Ansprüche hergestellt ist.
